# EUROPEAN PATENT SPECIFICATION

(11) **EP 3 841 032 B1**
(45) Date of publication and mention of the grant of the patent: **12.07.2023**
(21) Application number: 19762047.9
(22) Date of filing: 16.08.2019
(51) Int. Cl.: B65D 75/58

(54) **FOLD AND SEAL FLEXIBLE VALVES**
FALT- UND DICHTUNGSFLEXIBLE VENTILE
SOUPAPES SOUPLES D'ÉTANCHÉITÉ PLIABLES

(30) Priority: 21.08.2018 US 201862720323 P
(43) Date of publication of application: 30.06.2021
(73) Proprietor: Illinois Tool Works Inc., Glenview, IL 60025 (US)
(72) Inventor: LUDWIG, Christopher, Glenview, IL 60025 (US)
(74) Representative: HGF
(86) International application number: PCT/US2019/046819
(87) International publication number: WO 2020/041130

(56) References cited:
- EP-A1- 2 612 825
- DE-U1-202004 000 591
- US-A- 4 328 912

## Description

### Field of the Disclosure

The present disclosure relates to a flexible valve, wherein the valve can be folded and sealed for containing liquids within flexible packaging in combination with a flexible to semi-rigid container. The valve includes a channel formed between a bubble element and a channel layer which is closed whenever the valve is folded and sealed.

### Description of the Prior Art

Traditional packaging in the food/beverage, personal care and household care industries is primarily a combination of a rigid bottle or semi-flexible tube with a rigid fitment or cap of varying dispense types. Transition to flexible pouches for the main body of the container has continued to utilize similar, still rigid, fitments. There exists a need within these industries to complete the transition in order to create a fully flexible solution. Such a solution would improve functionality by representing both a flow control mechanism and re-close feature, enhance the overall sustainability profile and cost reduction of the packaging through material reduction and operational efficiency gains, and improved performance expectations in the growing e-commerce market.

Protruding element valves, or bubble valves are known in the art. They are frequently used with flexible to semi-rigid containers. While these valves have generally been satisfactory for their intended uses, further improvements are sought.

Representative embodiments of a bubble valve or a pressure-activated valve are disclosed in PCT/US2018/037461 entitled "Pouch Flip-Top for Bubble Valve Applications," filed on June 14, 2018; PCT/US2017/61500 entitled "Bubble Valve for Flexible Packaging," filed on November 14, 2017; U.S. Patent No. 9,963,284 entitled "Package Valve Closure System and Method," issued on May 8, 2018 to Steele; U.S. Patent No. 8,613,547 entitled "Packages Having Bubble-Shaped Closures," issued on December 24, 2013 to Steele; and U.S. Patent No. 7,207,717 entitled "Package Having a Fluid Actuated Closure," issued on April 24, 2007 to Steele. DE202004000591U1 relates to a packing that consists of two parts of plastic, aluminium or composite material interconnected along the edges forming a holding space for the contents which can be removed through a withdrawal opening. In one embodiment, the contents exit the package through a channel having a constiction, which can be considered a valve as in the preamble of appended claims 1 and 4. US4328912A relates to a self-contained valved package for a fluent commodity, and more particularly, a package with a depression/impression valve in the wall thereof. EP2612825A1 relates to a hair colorant container in the form of a flexible sachet having a laminate structure for storing a hair colorant component.

### OBJECTS AND SUMMARY OF THE DISCLOSURE

It is therefore an object of the present disclosure to provide improved closing and sealing for valves for flexible containers, namely bubble valves. This object is reached, according to the invention, in valves provided with a folding hinge by the features of appended claim 1, and in valves provided with interlocking elements for maintaining them folded by the features of appended claim 4.

The valve includes a base layer, with a bubble formed between the base layer and a bubble layer. A channel is formed between the bubble layer and a channel layer. A hinge element or separate interlocking assemblies are provided to allow the valve to be closed and secured in a folded configuration. That is, the folding and sealing of the valve caused the channel including the fluid outlet to be closed.

The disclosed embodiments provide additional re-close functionality to provide added security desired by consumers in use cases where the package may leak should it be subjected to errant external pressure (such as in a purse, backpack or otherwise being transported). Consumer research has shown that there is a preference to perform a manual action to achieve a sense that the package is truly closed in those use cases. Therefore, the design of this valve includes the same structure and functionality in terms of the multi-layer film construction serving the role of flow control.

### BRIEF DESCRIPTION OF THE DRAWINGS

Further objects and advantages of the disclosure will become apparent from the following description and from the accompanying drawings, wherein:
Figure 1 is a perspective view, partially in phantom, of an open configuration of a first embodiment of the valve of the present disclosure.
Figure 2 is a perspective view, partially in phantom, of a closed configuration of a first embodiment of the valve of the present disclosure.
Figure 3 is a front view of a package including an embodiment of the valve of the present disclosure.
Figure 4 is a side view of an open configuration of a first embodiment of the valve of the present disclosure.
Figure 5 is a side view of a closed configuration of a first embodiment of the valve of the present disclosure.
Figure 6 is a perspective view, partially in phantom, of an open configuration of a third embodiment of the valve of the present disclosure.
Figure 7 is a side view of an open configuration of a second embodiment of the valve of the present disclosure.
Figure 8 is a schematic of an embodiment of a manufacturing method to produce the valve of the present disclosure.
Figure 9 is a schematic of an embodiment of the valve of the present disclosure, wherein the locking elements of the zipper are oriented transversely to the flow direction.
Figures 10A and 10B are schematics of an embodiment of the valve of the present disclosure, in the respective open and closed positions, of an embodiment wherein the fold is in the flow direction and the locking elements are adjacent to the flow path.
Figures 11A and 11B are side views of an open configuration of an embodiment of the valve of the present disclosure wherein interlocking elements are above positioned transversely above and below the bubble element
Figure 11C is a side view of a closed configuration of the embodiment of the valve of Figure 11A.
Figure 12 is a perspective view of the valve of Figure 1, configured with the walls of a pouch or container.
Figure 13 is a side view of a further embodiment of the valve, configured with the walls of a pouch or container.

### DETAILED DESCRIPTION OF THE PREFERRED EMBODIMENTS

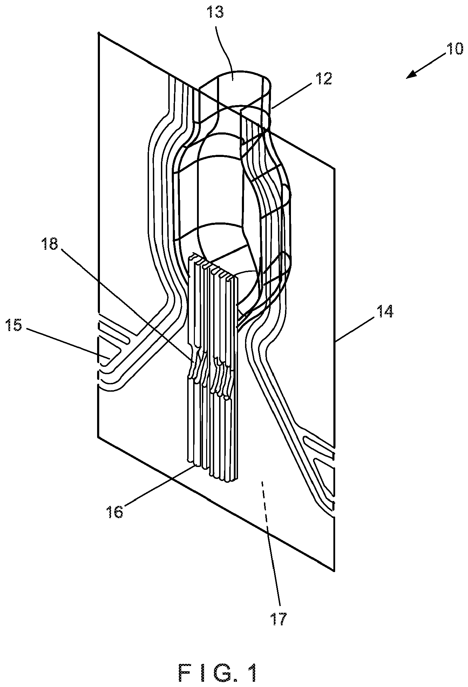

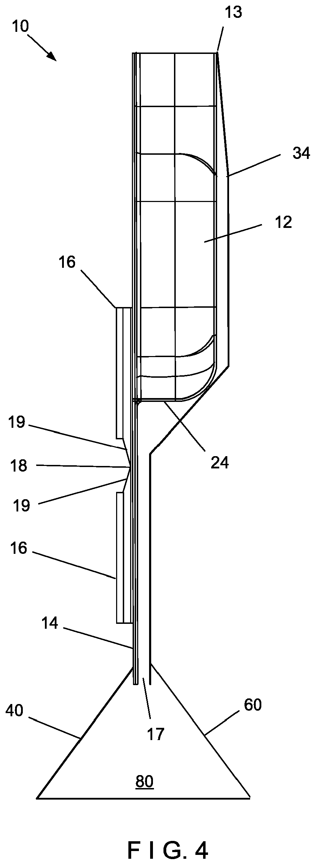

Referring now to the drawings in detail wherein like numerals refer to like elements throughout the several views, one sees that Figures 1 and 4 disclose a valve 10 in an unfolded or open configuration. Valve 10 includes a bubble valve subcomponent or protruding or bubble element 12 (with fluid outlet 13). The protruding or bubble element 12 is typically composed of a gas, liquid or fluid captured between a base layer 14 and a bubble layer 24 of flexible material. A hinge element 16 is attached to the base layer 14 opposite from the protruding or bubble element 12. The hinge element 16 is, for example, but not limited to, a press-to-close zipper or a self-mating zipper, typically with outwardly extending interlocking elements, and is attached to the base layer 14 (and bubble valve subcomponent or protruding or bubble element 12) either by adhesive or via traditional film sealing methods. The design of this hinge element 16 could likewise be an adhesive element or a form of hook-and-loop closure.

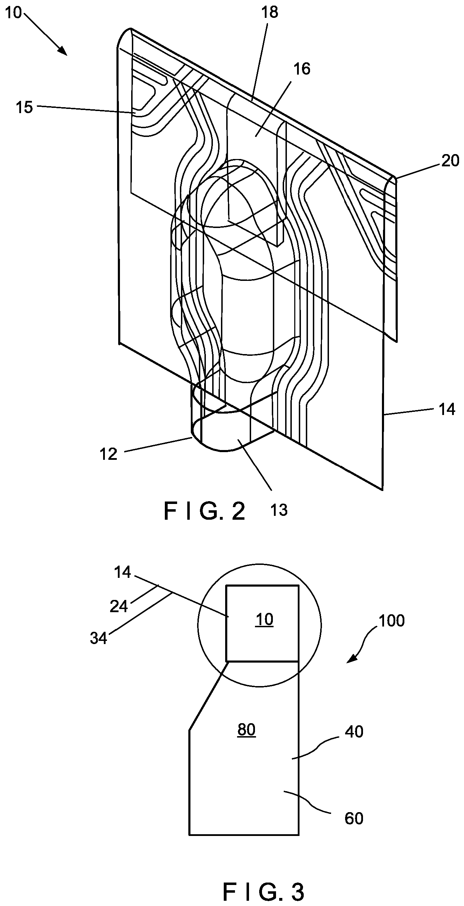

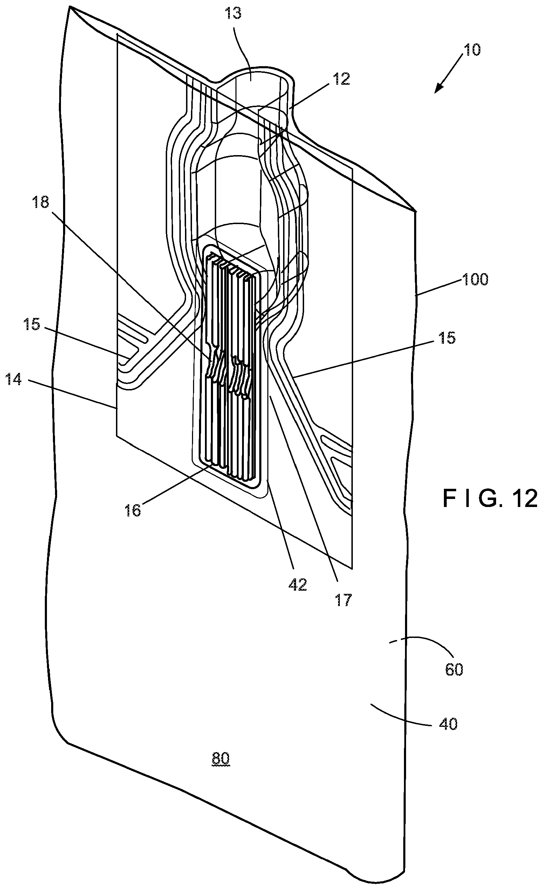

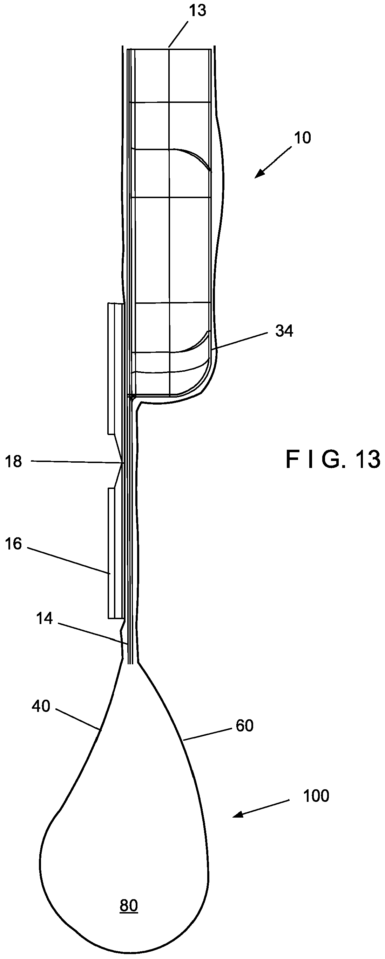

Channel seals 15, between the channel layer 34 and at least one of the base layer 14 and bubble layer 12, define a channel 17 through which fluid flows from a storage volume 80 (typically of a package, pouch, or similar container) to the bubble valve subcomponent or protruding or bubble element 12, as illustrated in Figure 3. The valve 10 is intended to be used in a package or container 100 with the storage volume 80 defined between a first panel 40 and a second panel 60 of polymeric or similar materials. Other materials or features of packages, container or pouches, such as, but not limited to, a bottom panel or a gusset, can be part of the package 100. The valve 10 is sealed into the package 100 between the first panel 40 and the second panel 60. In one embodiment, the base layer 14 is sealed to the first panel 40 and the channel layer is sealed to the second panel 60. Also see Figures 12 and 13.

The bubble valve subcomponent 12 includes the base layer 14, the bubble layer 24, and the channel layer 34 defining the fluid flow channel 17 between the bubble layer 24 and the channel layer 34. The bubble valve subcomponent 12 and its manufacture is described in PCT/US2017/61500 entitled "Bubble Valve for Flexible Packaging," filed on November 14, 2017.

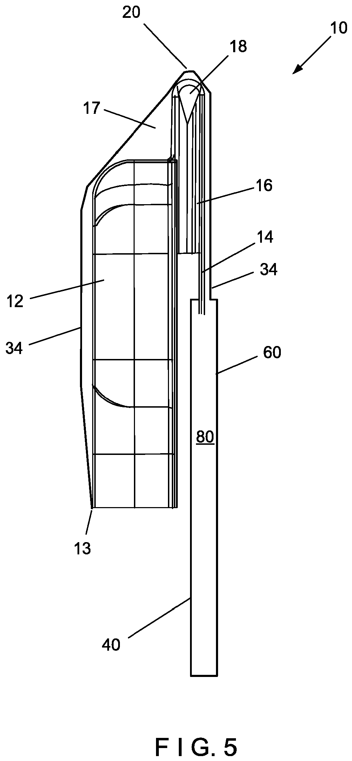

The hinge element 16 provides a secondary closure measure for the valve 10. In normal operation, contents of the storage volume 80 only pass through the channel 17 and fluid outlet or exit 13 when a user applies pressure to the storage volume 80. However, in some instances, an additional or secondary closure is useful, such as when leaving the package 100 in a purse or another container where contents of the package 100 could make a mess if leaked. The hinge element 16 provides such a more secure secondary closure when it is in the folded or closed configuration, as illustrated in Figures 2 and 5. A fold 20 develops in at least the layers 14, 24, 34 and further restricts channel 17 so no contents may pass through the valve 10, even if moderate pressure is applied to the storage volume 80.

In the embodiments of Figures 1-5, the hinge element 16 includes a mid-point or central area of reduced thickness 18. The reduced thickness 18 allows folding along a defined hinge line and further reduces obstruction or bulging when the hinge element is folded, as illustrated in Figs. 2 and 5. As shown in Figure 4, in some embodiments, the hinge element 16 further includes at least one ramped area 19 (e.g., one on each side of the central area of reduced thickness 18) to further facilitate closure of the hinge element 16. The fold of layers 14, 24, 34 in the closed configuration typically develops at the central area of reduced thickness 18, which acts as a hinge point. The entire valve 10 can be folded back upon itself and snapped into a fixed position with the channel 17 now kinked and the flow more reliably cutoff or terminated. When desired, the end of the valve 10 can be pulled, the hinge element 16 releases and returns to the unfolded or open configuration illustrated in Figures 1 and 4. The user can again squeeze the pouch 80 as before to dispense products from the storage volume 80 in the pouch through the channel 17 and fluid outlet or exit 13.

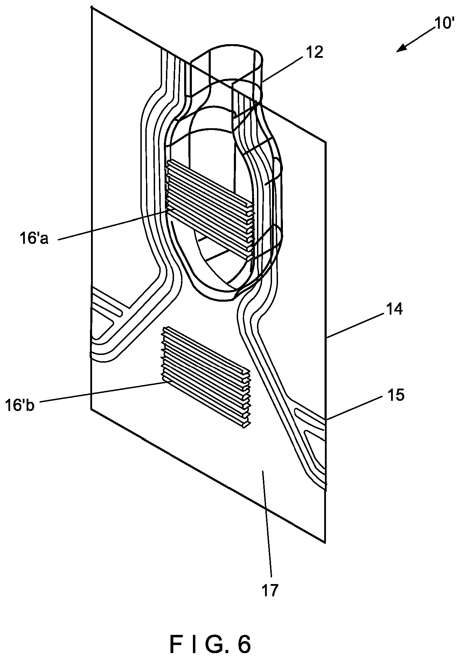

While the embodiments illustrated in Figures 1 through 5 show hinge element 16 parallel and aligned with the center of the protruding element 12, other alignments are possible. For example, Figure 6 illustrates an open configuration of valve 10' with hinge elements 16'a and 16'b that are perpendicular to the protruding element 12. Similar seals 15 and layers 14, 24, 34 are used as the embodiment illustrated in Figures 1-5. Both hinge elements 16'a and 16'b are attached to the base layer 14 opposite of the protruding or bubble element 12. The first hinge element 16'a is attached proximate to the protruding or bubble element 12. The second hinge element 16'b is attached proximate to the channel 17. As the hinge elements 16'a, 16'b are separate pieces, a central area of reduced thickness 18 is not needed. The first and second hinge elements 16'a and 16'b include interlocking elements so that the first and second hinge elements 16'a and 16'b can interlock with each other, thereby holding the valve 10' in a folded and closed configuration The operation of the valve 10' is substantially similar to that of valve 10. The folded or closed configuration of valve 10' is similar to that illustrated in Figures 2 and 5.

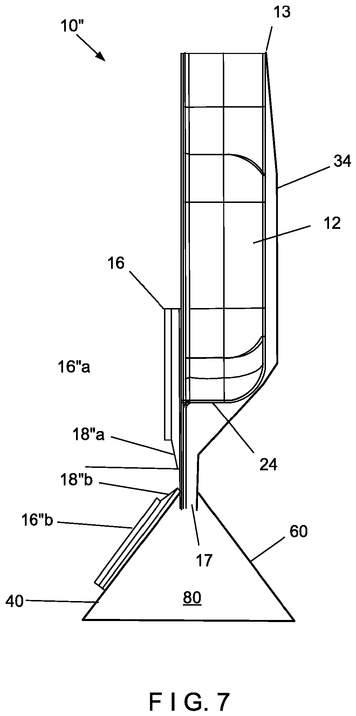

Figure 7 illustrates yet another embodiment of a valve 10" in an unfolded or open configuration. Similar seals 15 and layers 14, 24, 34 are used as the embodiment illustrated in Figures 1-5. However, first and second hinge elements 16"a and 16"b are separated and applied to different layers/panels. The first hinge element 16"a is attached to the opposite side of the base layer 14 from the bubble valve subcomponent 12. The second hinge element 16"b is attached to the first panel 16 of the package 100. In some embodiments (e.g., the first and second hinge elements 16"a and 16"b are typically less than 2,54 cm (one inch) apart), both the first hinge element 16"a and the second hinge element 16"b have an area of reduced thickness 18"a and 18"b, respectively. The operation of the valve 10" is substantially similar to that of valve 10. The folded or closed configuration of valve 10" is similar to that illustrated in Figures 2 and 5 in that the folded or closed configuration restricts or eliminates flow through the channel 17 and fluid outlet or exit 13.

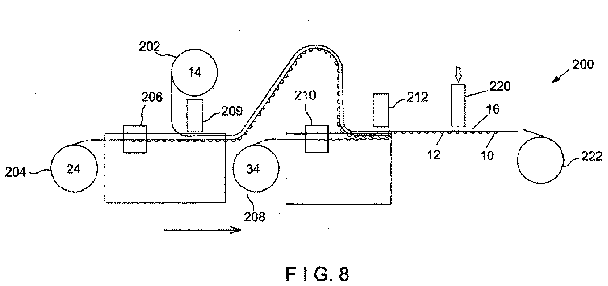

Figure 8 illustrates a method 200 for manufacturing valves 10, 10', 10" of the present disclosure. The various components of valve 10 are typically constructed of polymeric material, but are not limited thereto. First, the bubble valve subcomponent 12 is made from the base layer 14 as provided from base layer unwind 202 and bubble layer 24 as provided from bubble layer unwind 204 with bubble thermoforming by first bubble layer thermoformer 206. Bubble layer 24 is sealed along predetermined areas (such as the edges, in order to leave the central area of the bubble free of thermoforming between base layer 14 and bubble layer 24) to base layer 14 by bubble to base ultrasonic sealer 209. Channel layer 34 is provided from channel layer unwind 208 with bubble thermoforming by second bubble layer thermoformer 210. Channel seal 15 is created by an ultrasonic sealer 212 or other means for sealing known in the art. Thermoformers 206, 210, or other means for forming polymeric material known in the art, are used to create shapes of the bubble valve subcomponent 12. Then, the hinge element 16 is attached to the bubble valve subcomponent 12 by a hinge sealer 220, creating the valve 10, 10', 10". In one embodiment, such as, but not limited to the valve 10 illustrated in Figures 1-5, the hinge element 16 is applied and attached to the subcomponent 12 in a machine direction (i.e., in the direction indicated by "Material Flow" in Figure 8). In another embodiment, such as, but not limited to, the valve 10' illustrated in Figure 6, the hinge element 16' is applied and attached to the bubble valve subcomponent 12 in a transverse direction. In yet another embodiment, such as, but not limited to, the valve 10" illustrated in Figure 7, only a portion of the hinge element 16" (i.e., the first hinge element 16"a) is applied and attached to the bubble valve subcomponent 12; the second hinge element 16"b is applied to the first panel 40 later (e.g., when the valve 10" is inserted and sealed to the package 100). Further similar variations are illustrated in 9-11C and require variations in the hinge sealer 220 in order to attach the interlocking element assemblies. The finished valves 10, 10', 10" are spooled onto finished valve rewind 222.

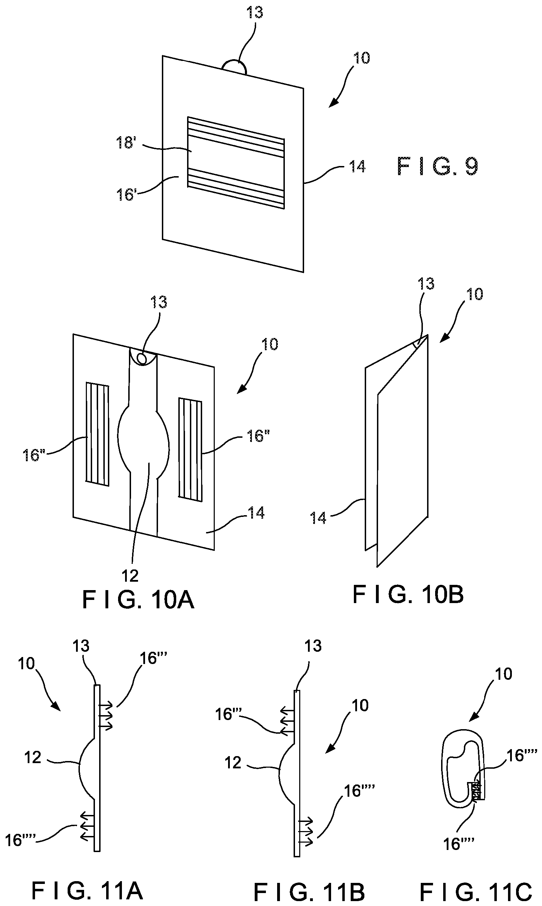

As shown in Figure 9, the hinge element 16', including area of reduced thickness 18', may be oriented transversely (i.e., perpendicular to the flow path) on base layer 14 (i.e., on the opposite side from protruding or bubble element 12).

As shown in Figures 10A and 10B, an embodiment of valve 10 includes interlocking element assemblies 16" arranged on lateral sides of protruding element 12 and the associated flow path, and parallel thereto. As shown in Figure 10B, the valve 10 can be folded along protruding element 12 and the associated flow path, thereby bringing together the two interlocking element assemblies 16" to interlock with each other.

As shown in Figures 11A, an interlocking element assembly 16‴ can be placed immediately downwardly adjacent from the fluid outlet or exit 13, on the opposite side from the protruding element 12 (i.e., base layer 14), and perpendicular to the flow path. Interlocking element assembly 16"" is placed immediately below the protruding element 12 on the same side as protruding element 12 (i.e., channel layer 34), and perpendicular to the flow path. Similarly, as shown in Figure 11B. an interlocking element assembly 16‴ can be placed immediately downwardly adjacent from the fluid outlet or exit 13, on the same side as protruding element 12 (i.e., channel layer 34), and perpendicular to the flow path. Further in Figure 11B, interlocking element assembly 16ʺʺ is placed below the protruding element 12 on the opposite side from protruding element 12 (i.e., base layer 14), and perpendicular to the flow path. As shown in Figure 11C, the embodiment of Figure 11A can be rolled so as to conceal the fluid outlet or exit 13 and interlocking element assemblies 16‴ and 16ʺʺ are joined or interlocked with each other. The embodiment of Figure 11B can be rolled to achieve the configuration analogous to that of Figure 11C.

Figure 12 illustrates the valve 10 of Figure 1, incorporated into a package 100, wherein the base layer 14 is sealed to the first panel 40 of package 100 and the channel layer 34 is sealed to the second panel 60 of package 100. The first panel 40 includes a cut-out area 42 through which the hinge element 16 extends, thereby exposing the interlocking elements of hinge element 16 and allowing the configuration to be folded along area of reduced thickness 18, thereby allowing the upper and lower portions of hinge element 16 to interlock with each other. The portions of first panel 40 adjacent to the cut-out area 42 are sealed to first panel 40, throughout a periphery of cut-out area 42, to preserve hermeticity.

Figure 13 illustrates a valve 10 similar to that of Figures 1 and 12, except that the first panel 40 is sealed to the base layer 14 of valve 10 and the hinge element 16, including area of reduced thickness 1, originally as a separate element, is sealed or otherwise attached to the external surface of first panel 40. No cut-out area 42 (as shown in Figure 12) is necessary in the embodiment illustrated in Figure 13. That is, a portion of first panel 40 is positioned and sealed between a portion of the valve 10 and the hinge element 16.

Thus the several aforementioned objects and advantages are most effectively attained. Although preferred embodiments of the invention have been disclosed and described in detail herein, it should be understood that this invention is in no sense limited thereby.

## Claims

1. A valve (10) for a package (100), comprising:
a protruding element (12),
a channel layer (34) forming a channel (17) between the protruding element (12) and the channel layer (34), the channel including a fluid outlet (13); and
a hinge element (16) attached to the valve, the hinge element (16) having a first configuration and a second configuration wherein, in the first configuration, the hinge element (16) is unfolded and fluid can flow through the channel (17) to the fluid outlet (13) and, in the second configuration, the hinge is folded and fluid is prevented from flowing through the channel (17) to the fluid outlet (13), **characterised in that** the protruding element (12) is a bubble valve subcomponent including a base layer (14), a bubble layer (24) and the channel layer (34).

2. The valve of Claim 1, wherein the hinge element (16) is attached to the base layer (14) on an opposite side of the bubble valve subcomponent.

3. The valve of Claim 1, wherein the hinge element (16) includes a central area of reduced thickness (18) thereby providing a fold line for the hinge element in the second configuration.

4. A valve (10', 10") for a package (100), comprising:
a protruding element (12),
a channel layer (34) forming a channel (17) between the protruding element (12) and the channel layer (34), the channel (17) including a fluid outlet (13); and
first and second interlocking assemblies (16', 16", 16‴) attached to the valve, the first and
second interlocking assemblies (16', 16", 16‴) having a first configuration and a second configuration wherein, in the first configuration, the first and second interlocking assemblies (16', 16", 16‴) are separated from each other and the valve ( 10', 10") is unfolded and fluid can flow through the channel (17) to the fluid outlet (13) and, in the second configuration, the first and second interlocking assemblies (16', 16", 16‴) are interlocked with each other so that the valve is folded and fluid is prevented from flowing through the channel (17) to the fluid outlet (13),
**characterised in that** the protruding element (12) is a bubble valve subcomponent including a base layer (14), a bubble layer (24) and the channel layer (34).

5. A package (100) comprising:
a storage volume (80) defined between a first panel (40) and a second panel (60); and
a valve (10, 10') accoding to claim 1 or claim 4 between the first panel (40) and the second panel (16).

6. The package of Claim 5,
wherein the hinge element (16) includes a central area of reduced thickness (18).

7. The valve of claim 3 or the package of Claim 6,
wherein the hinge element (16) includes at least one ramped area (19) proximate the central area of reduced thickness (18).

8. The valve of claim 1 or the package of Claim 5,
wherein the hinge element (16) is a zipper.

9. The valve or the package of Claim 8,
wherein the zipper is a self- mating zipper.

10. The package of Claim 5,
wherein the hinge element is (16) attached to the valve.

11. The package of Claim 10,
wherein the hinge element (16) is parallel and aligned with the protruding element (12).

12. The valve of claim 1 or the package of Claim 5,
wherein the hinge element (16) includes a first hinge element (16'a) and a second hinge element (16'b).

13. The package of Claim 12,
wherein the first hinge element (16'a) is attached to a portion of the protruding element (12), and the second hinge element (16'b) is attached to a portion of the package (100).

14. The package of Claim 13,
wherein the first (16'a) and second (16'b) hinge elements are perpendicular to the protruding element (12).

15. The package of Claim 12,
wherein the first hinge element (16'a) is attached to the protruding element (12), and the second hinge element (16'b) is attached to the first panel (40) of the package (100).

## Patentansprüche

1. Ventil (10) für eine Verpackung (100), aufweisend:
ein vorstehendes Element (12),
eine Kanalschicht (34), die einen Kanal (17) zwischen dem vorstehenden Element (12) und der Kanalschicht (34) bildet, wobei der Kanal einen Fluidauslass (13) beinhaltet; und
ein Scharnierelement (16), das an dem Ventil angebracht ist, wobei das Scharnierelement (16) eine erste Konfiguration und eine zweite Konfiguration hat, wobei das Scharnierelement (16) in der ersten Konfiguration entfaltet ist und Fluid durch den Kanal (17) zu dem Fluidauslass (13) strömen kann und das Scharnier in der zweiten Konfiguration gefaltet ist und verhindert wird, dass Fluid durch den Kanal (17) zu dem Fluidauslass (13) strömt, **dadurch gekennzeichnet, dass** das vorstehende Element (12) eine Blasenventilteilkomponente ist, die eine Basisschicht (14), eine Blasenschicht (24) und die Kanalschicht (34) beinhaltet.

2. Ventil nach Anspruch 1, wobei das Scharnierelement (16) an der Basisschicht (14) auf einer gegenüberliegenden Seite der Blasenventilteilkomponente angebracht ist.

3. Ventil nach Anspruch 1, wobei das Scharnierelement (16) einen mittleren Bereich mit reduzierter Dicke (18) beinhaltet, wodurch eine Faltlinie für das Scharnierelement in der zweiten Konfiguration bereitgestellt wird.

4. Ventil (10', 10") für eine Verpackung (100), aufweisend:
ein vorstehendes Element (12),
eine Kanalschicht (34), die einen Kanal (17) zwischen dem vorstehenden Element (12) und der Kanalschicht (34) bildet, wobei der Kanal (17) einen Fluidauslass (13) beinhaltet; und
erste und zweite Verriegelungsbaugruppen (16', 16", 16‴), die an dem Ventil angebracht sind, wobei die ersten und die zweiten Verriegelungsbaugruppen (16', 16", 16‴) eine erste Konfiguration und eine zweite Konfiguration haben, wobei die ersten und die zweiten Verriegelungsbaugruppen (16', 16", 16‴) n der ersten Konfiguration voneinander getrennt sind und das Ventil (10', 10") entfaltet ist und Fluid durch den Kanal (17) zu dem Fluidauslass (13) strömen kann und die ersten und die zweiten Verriegelungsbaugruppen (16', 16", 16‴) in der zweiten Konfiguration miteinander verriegelt sind, sodass das Ventil gefaltet ist und verhindert wird, dass Fluid durch den Kanal (17) zu dem Fluidauslass (13) strömt,
**dadurch gekennzeichnet, dass** das vorstehende Element (12) eine Blasenventilteilkomponente ist, die eine Basisschicht (14), eine Blasenschicht (24) und die Kanalschicht (34) beinhaltet.

5. Verpackung (100), aufweisend:
ein Aufnahmevolumen (80), das zwischen einem ersten Plattenelement (40) und einem zweiten Plattenelement (60) definiert ist; und
ein Ventil (10, 10') nach Anspruch 1 oder Anspruch 4 zwischen dem ersten Plattenelement (40) und dem zweiten Plattenelement (16).

6. Verpackung nach Anspruch 5,
wobei das Scharnierelement (16) einen mittleren Bereich mit reduzierter Dicke (18) beinhaltet.

7. Ventil nach Anspruch 3 oder Packung nach Anspruch 6,
wobei das Scharnierelement (16) zumindest einen geneigten Bereich (19) in der Nähe des mittleren Bereichs mit reduzierter Dicke (18) beinhaltet.

8. Ventil nach Anspruch 1 oder Verpackung nach Anspruch 5, wobei das Scharnierelement (16) ein Reißverschluss ist.

9. Ventil oder Verpackung nach Anspruch 8, wobei der Reißverschluss ein sich selbst schließender Reißverschluss ist.

10. Verpackung nach Anspruch 5, wobei das Scharnierelement (16) an dem Ventil angebracht ist.

11. Verpackung nach Anspruch 10,
wobei das Scharnierelement (16) parallel und mit dem vorstehenden Element (12) ausgerichtet ist.

12. Ventil nach Anspruch 1 oder Verpackung nach Anspruch 5, wobei das Scharnierelement (16) ein erstes Scharnierelement (16'a) und ein zweites Scharnierelement (16'b) beinhaltet.

13. Verpackung nach Anspruch 12,
wobei das erste Scharnierelement (16'a) an einem Abschnitt des vorstehenden Elements (12) angebracht ist und das zweite Scharnierelement (16'b) an einem Abschnitt der Verpackung (100) angebracht ist.

14. Verpackung nach Anspruch 13,
wobei das erste Scharnierelement (16'a) und das zweite Scharnierelement (16'b) senkrecht zu dem vorstehenden Element (12) sind.

15. Verpackung nach Anspruch 12,
wobei das erste Scharnierelement (16'a) an dem vorstehenden Element (12) angebracht ist und das zweite Scharnierelement (16'b) an dem ersten Plattenelement (40) der Verpackung (100) angebracht ist.

## Revendications

1. Soupape (10) pour un emballage (100), comprenant :
un élément en saillie (12),
une couche de canal (34) formant un canal (17) entre l'élément en saillie (12) et la couche de canal (34), le canal comprenant une sortie de fluide (13) ; et
un élément d'articulation (16) fixé à la soupape, l'élément d'articulation (16) ayant une première configuration et une deuxième configuration dans laquelle, dans la première configuration, l'élément d'articulation (16) est déplié et le fluide peut s'écouler à travers le canal (17) vers la sortie de fluide (13) et, dans la deuxième configuration, la articulation est pliée et l'écoulement de fluide est empêché de s'écouler à travers le canal (17) vers la sortie de fluide (13), **caractérisé en ce que** l'élément en saillie (12) est un sous-composant de bulle à fonction soupape comprenant une couche de base (14), une couche de bulle (24) et la couche de canal (34).

2. Soupape selon la revendication 1, dans laquelle l'élément d'articulation (16) est fixé à la couche de base (14) sur un côté opposé du sous-composant de bulle à fonction soupape.

3. Soupape selon la revendication 1, dans laquelle l'élément d'articulation (16) comprend une zone centrale d'épaisseur réduite (18) fournissant ainsi une ligne de pliage pour l'élément d'articulation dans la deuxième configuration.

4. Soupape (10', 10") pour un emballage (100), comprenant :
un élément en saillie (12),
une couche de canal (34) formant un canal (17) entre l'élément en saillie (12) et la couche de canal (34), le canal (17) comprenant une sortie de fluide (13) ; et
un premier et un deuxième ensembles de verrouillage (16', 16", 16‴) fixés à la soupape, les premier et deuxième ensembles de verrouillage (16', 16", 16‴) ayant une première configuration et une deuxième configuration dans lesquelles, dans la première configuration, les premier et deuxième ensembles de verrouillage (16', 16", 16‴) sont séparés l'un de l'autre et la soupape (10', 10") est dépliée et le fluide peut s'écouler à travers le canal (17) vers la sortie de fluide (13) et, dans la deuxième configuration, les premier et deuxième ensembles de verrouillage (16', 16", 16‴) sont verrouillés l'un avec l'autre de sorte que la soupape est pliée et le fluide est empêché de s'écouler à travers le canal (17) vers la sortie de fluide (13),
**caractérisé en ce que** l'élément en saillie (12) est un sous-composant de bulle à fonction soupape comprenant une couche de base (14), une couche de bulle (24) et la couche de canal (34).

5. Emballage (100) comprenant :
un volume de stockage (80) défini entre un premier panneau (40) et un deuxième panneau (60) ; et
une soupape (10, 10') selon la revendication 1 ou la revendication 4 entre le premier panneau (40) et le deuxième panneau (16).

6. Emballage selon la revendication 5,
dans lequel l'élément d'articulation (16) comprend une zone centrale d'épaisseur réduite (18).

7. Soupape selon la revendication 3 ou emballage selon la revendication 6,
dans lequel l'élément d'articulation (16) comprend au moins une zone inclinée (19) à proximité de la zone centrale d'épaisseur réduite (18).

8. Soupape selon la revendication 1 ou emballage selon la revendication 5, dans lequel l'élément d'articulation (16) est une fermeture à glissière.

9. Soupape ou emballage selon la revendication 8, dans lequel la fermeture à glissière est une fermeture à glissière à accouplement automatique.

10. Emballage selon la revendication 5, dans lequel l'élément d'articulation est (16) fixé à la soupape.

11. Emballage selon la revendication 10,
dans lequel l'élément d'articulation (16) est parallèle et aligné avec l'élément en saillie (12).

12. Soupape selon la revendication 1 ou emballage selon la revendication 5,
dans lequel l'élément d'articulation (16) comprend un premier élément d'articulation (16'a) et un deuxième élément d'articulation (16'b).

13. Emballage selon la revendication 12,
dans lequel le premier élément d'articulation (16'a) est fixé à une partie de l'élément en saillie (12), et le deuxième élément d'articulation (16'b) est fixé à une partie de l'emballage (100).

14. Emballage selon la revendication 13,
dans lequel les premier (16'a) et deuxième (16'b) éléments d'articulation sont perpendiculaires à l'élément en saillie (12).

15. Emballage selon la revendication 12,
dans lequel le premier élément d'articulation (16'a) est fixé à l'élément en saillie (12), et le deuxième élément d'articulation (16'b) est fixé au premier panneau (40) de l'emballage (100).
